# EUROPEAN PATENT APPLICATION

(11) **EP 3 806 324 A1**
(43) Date of publication of application: **14.04.2021**
(21) Application number: 20200397.6
(22) Date of filing: 06.10.2020
(51) Int. Cl.: H02S 20/00

(54) **STEEL FLOATING PLATFORM**

(30) Priority: 08.10.2019 IT 201900018242
(71) Applicant: Falchetti, Gianni, 06035 Gualdo Cattaneo (PG) (IT); Fasano, Giuseppe, Qingdao, Shandong (CN)
(72) Inventor: Falchetti, Gianni, 06035 Gualdo Cattaneo (PG) (IT); Fasano, Giuseppe, Qingdao, Shandong (CN)
(74) Representative: Baldi, Claudio

(57) **Abstract**

A floating platform (P) for supporting photovoltaic panels (1) comprises a base structure (B) comprising at least one floating body (2) suitable for being partially immersed in water, and a support structure comprising at least one supporting frame (T) connected to the base structure (B) for supporting said plurality of photovoltaic panels (1); said at least one floating body comprising a block (20) made of cross-linked polyethylene foam with a lower density than water; and a covering frame (22, 23) that covers said block (20) completely or partially and is made of high-refraction steel.

## Description

The present patent application for industrial invention relates to an improved steel floating platform suitable for being preferably used as floating platform to support photovoltaic panels.

Although the present invention has been devised as floating platform in association with photovoltaic panels, the purposes of the present invention are also achieved when said floating platform is used to support other devices that require a floating platform to be disposed in a marine environment, such as for instance: antennas, relay stations, transformation components (electrical transformers) or similar devices, support for materials or equipment immersed at a constant depth in water, marine farming (for example mussels), agrotechnical structures such as greenhouses and the like, immersion system for data center water cooling.

The floating platform is devised to be used in a marine environment, and more specifically in water surfaces, such as pits, ponds, lakes, lagoons, artificial basins, protected marine bays, marine lakes or the like.

As it is known, the provision of devices, such as photovoltaic panels, in a marine environment allows for not using agricultural land and for reducing the environmental impact because the photovoltaic panels or devices are not visible from a distance.

Moreover, when photovoltaic panels are disposed on said floating platforms, in addition to having a very low impact on the environment, the provision in a marine environment allows for lowering the operating temperature of the photovoltaic panels compared to a ground installation or a roof installation, thus increasing the performance of the photovoltaic panels.

Additionally, the provision of the photovoltaic panels in a marine environment allows for keeping the installation cleaner with respect to a ground installation.

Otherwise said, the more dust or sand is contained in the soil where the photovoltaic installation is mounted, the dirtier the photovoltaic panels will be, substantially reducing their energy efficiency and increasing the frequency of cleaning operations.

A floating platform according to the prior art comprises the following main components:
a) a base structure comprising floating bodies of different types; and
b) a support structure for the photovoltaic panels or devices of any other kind.

The floating bodies of the base structure and the supporting structure are normally made of a plastic material, namely HDPE.

Floating platforms of this kind have proved to be unreliable.

Firstly, the high floatability of such a platform is not due to the plastic material of the floating bodies of the platform, but to the air contained in said floating bodies. However, said floating bodies can be easily perforated or damaged, including voluntarily, and therefore have a very low physical resistance.

Evidently, such a perforation or damage would cause the penetration of water inside the floating body, consequently causing the sinking of the floating platform and the anticipated disposal of the photovoltaic panels or devices with respect to the actual life cycle.

Therefore, the traditional platforms with floating bodies that consist in plastic containers filled with air are not characterized by a high reliability level.

Moreover, similar platforms are impaired in terms of:
- structural resistance to shocks with floating objects (trunks and floating materials);
- resistance to mechanical stress induced by changes in the water level, which can be sudden and significant;
- resistance to mechanical stress induced by strong winds that often determine the collision of the floating blocks with consequent damage and successive sinking of the platform;
- resistance to extraordinary loads, such as for instance snow or ice, which may impair the floating capability of the platform, in particular in basins situated in mountain regions;
- safety for maintenance operators who are forced to operate in precarious balance conditions with small supporting surfaces;
- risk of fire due to the use of plastic materials in the presence of circuits or electrical connections.

CN206364749U discloses a floating device for supporting photovoltaic panels. Such a floating device comprises a base structure made of longitudinal bars in parallel position, and crossbars in orthogonal position to said longitudinal bars and irremovably fixed to the longitudinal bars.

Floating bodies are supported by the base structure. In particular, said floating device comprises:
- first floating bodies suitable for being immersed in water, at least partially, and consisting in monolithic blocks that are integrally made of molded plastic materials, and
- second floating bodies, consisting in blocks that are open on the bottom, similar to a lid, made of molded plastics and filled with extruded polystyrene foam (XPS), namely a cross-linked foam plastic material.

Moreover, such a floating device comprises a supporting structure comprising supporting frames fixed to the base structure to support photovoltaic panels. Therefore, such a floating device with floating bodies made of plastic material is impaired by the same drawbacks as the traditional platforms as described above, in terms of low reliability, low resistance to mechanical stress of said floating bodies made of molded plastics.

CN109693761 discloses a floating structure with long-standing thermal insulation function, comprising a functional layer, a supporting layer and a floating layer. The functional layer is formed of a plurality of prefabricated concrete plates disposed in adjacent position.

The floating layer comprises a rack for steel drums.

In particular, said rack comprises longitudinal ribs disposed in parallel position in such a way that a cavity is formed between two adjacent longitudinal ribs, said cavity being suitable for housing the steel drums disposed in adjacent position, More particularly, two steel drums are welded in parallel position, being successively welded to the transverse ribs to form the steel rack. Each cavity of the track is filled with foam concrete, at least partially. Otherwise said, each steel drum acts receptacle for the casting of concrete foam.

The purpose of the present invention is to overcome the drawbacks of the prior art by disclosing a floating platform that is capable of lasting for a period of time equal to or longer than the life cycle of the devices, particularly photovoltaic panels, disposed on the floating platform, and also capable of representing a new, original and economically interesting solution able to change the current market of floating platforms.

An additional purpose of the present invention is to disclose a floating platform that is reliable, safe, and versatile and at the same time easy to make.

Another purpose of the present invention is to disclose a floating photovoltaic installation for the production of power comprising a floating platform capable of supporting a plurality of photovoltaic panels for the conversion of solar energy.

These purposes are achieved according to the invention with the characteristics of the appended independent claim 1.

Advantageous embodiments appear from the dependent claims.

The floating platform according to the invention is defined by claim 1.

The advantages of the floating platform according to the invention are evident. Because of the provision of the block of cross-linked polyethylene foam and of the steel covering frame in the floating bodies, the platform is highly reliable and unsinkable.

In particular, the floating platform according to the invention has been devised to overturn some design precepts of traditional platforms in order to eliminate the aforementioned problems of traditional platforms and maximize the benefits for the devices that are mounted over or under the platform. More precisely, the platform of the invention integrally solves the aforementioned problems and provides beneficial effects in terms of:
- higher efficiency through the provision of panels with two-sided technology that are perfectly supported in power generative terms by the adoption of a highly-reflecting structure originally designed to maximize the solar refraction towards a back side of said panels;
- higher efficiency through the provision of floating bodies with metal coating, instead of a plastic one, thus maximizing the cooling effect of the operating temperature by transferring the heat to the water by means of the metal coating of the floating bodies (using the thermodynamics principle);
- higher density through an arrangement of the structural supports of the photovoltaic panels in east/west direction, instead of south or north direction. Such a design choice is used:
   ∘ to reduce the dimensions of the installation, approximately saving 50% of the occupied space with respect to traditional installations;
   ∘ to reduce the quantity of materials used;
   ∘ to reduce electrical losses thanks to the lower dimensions of the installation and consequently to the lower length of the electrical connections;
   ∘ to maximize energy production by taking the most out of solar radiation in the morning and in the afternoon;
   ∘ to optimize the ventilation of the lower part of the panel with additional direct beneficial effects in terms of cooling and higher power generation;
- provision of immersed devices that are anchored and structurally integrated in the platform.

In fact, in the platform of the invention, every single element of the structural body contributes to strengthen the platform, ensuring a high resistance to the external forces and loads that are usually the most frequent risk of damage for the entire structure.

In particular, the floating platform has an extremely resistant metal structure and floating elements made with blocks made of cross-linked polyethylene foam or bamboo.

For the sake of clarity, the description of the floating platform according to the invention continues with reference to the appended drawings, which have a merely illustrative, not limiting value, wherein:
Fig. 1 is an axonometric view of the floating platform according to the invention, wherein the supporting frames of the supporting structure of the floating platform are configured in such a way to integrate photovoltaic panels;
Fig. 1A is an axonometric view of the floating platform according to the invention, wherein the supporting frames of the supporting structure consist in supporting grilles;
Fig. 2 is an axonometric view of the base structure of the floating platform according to the invention.
Fig. 3 is an axonometric view of a first embodiment of the floating body of the base structure;

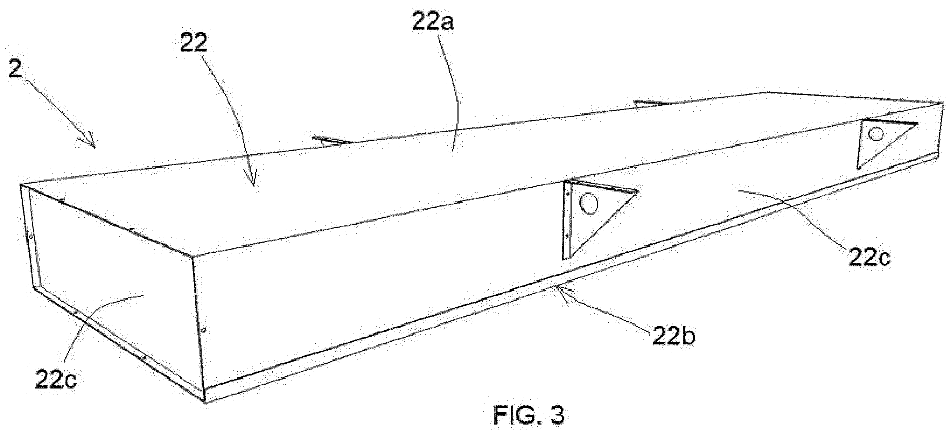

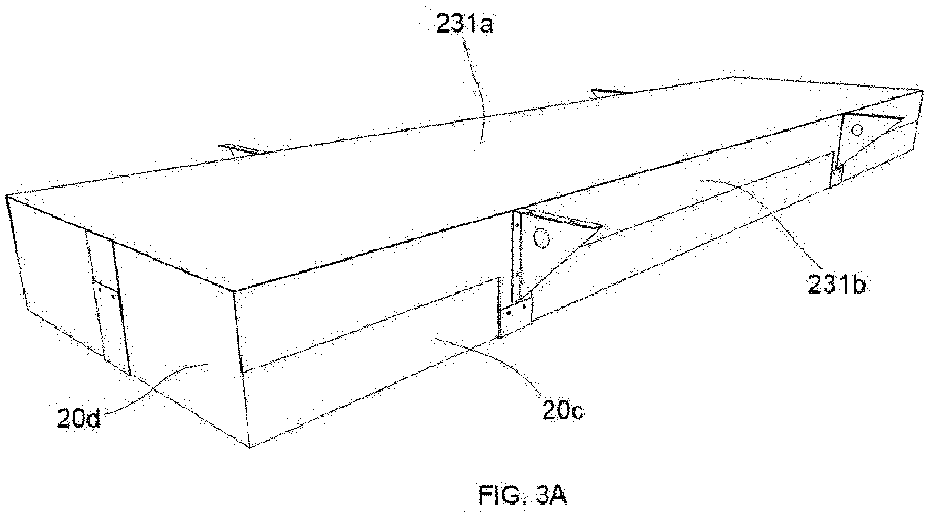

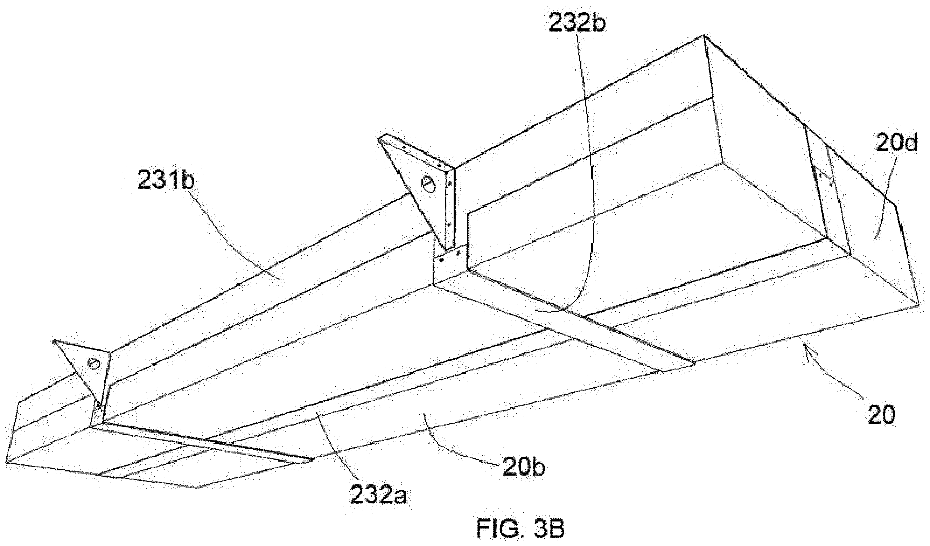

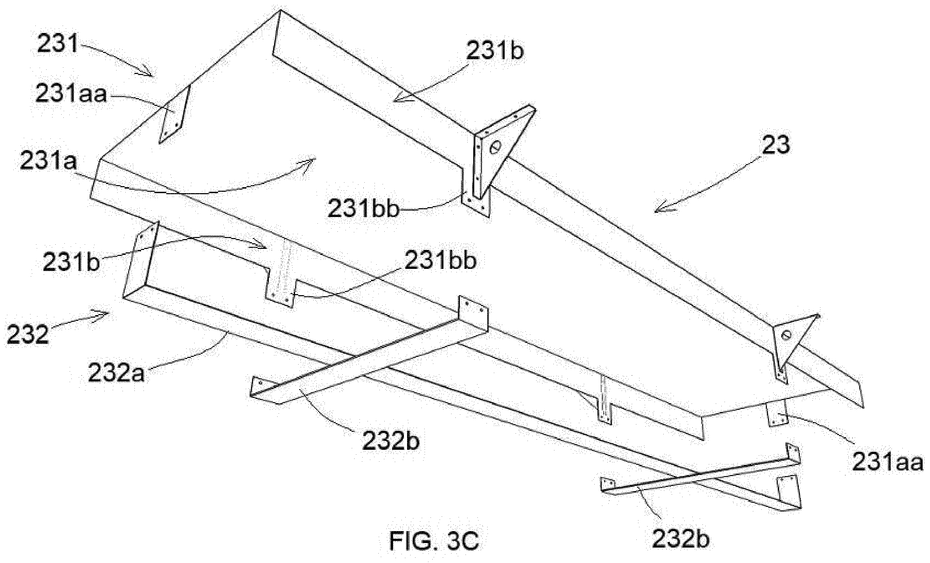

Fig. 3 is an axonometric view of a second embodiment of the floating body of the base structure;
Fig. 3B shows the floating body of Fig. 3A seen from a different angle;
Fig. 3C is an axonometric view of the covering frame of the floating body of Fig. 3A and 3B;

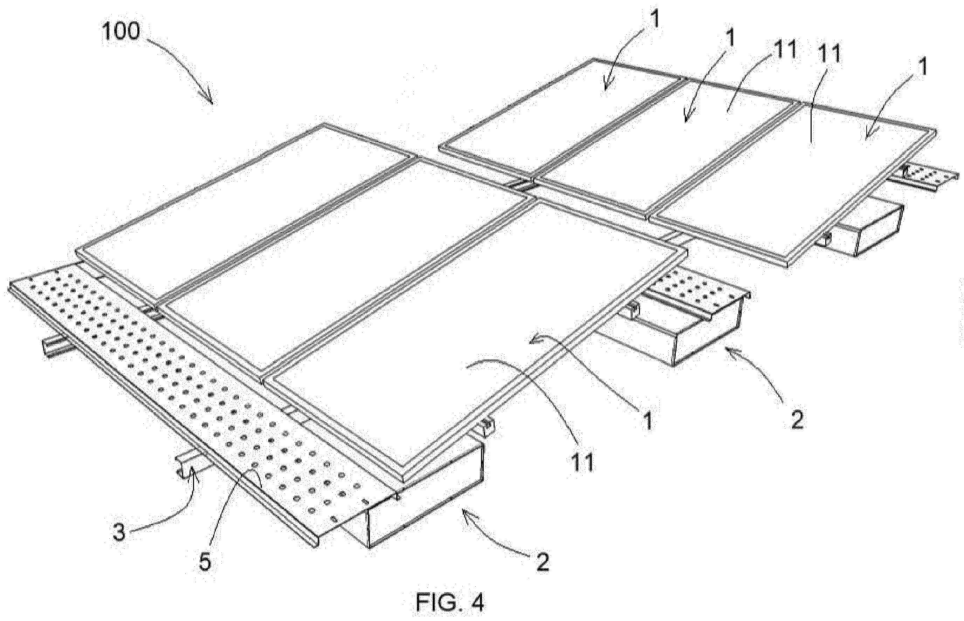

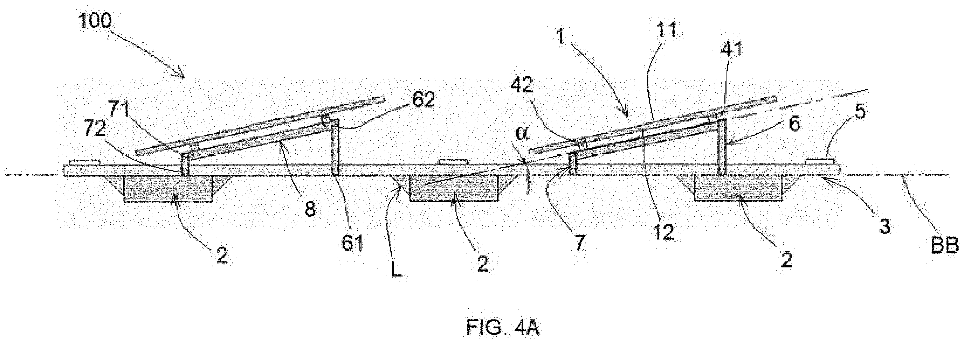

Fig. 4 is an axonometric view of the floating photovoltaic installation according to the invention;
Fig. 4 is a side view of the floating photovoltaic installation according to the invention,

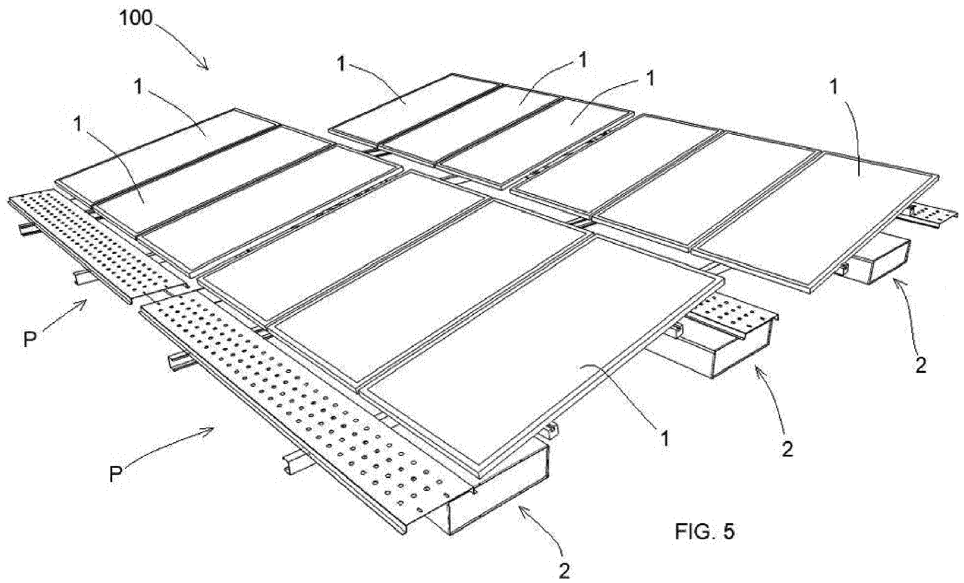

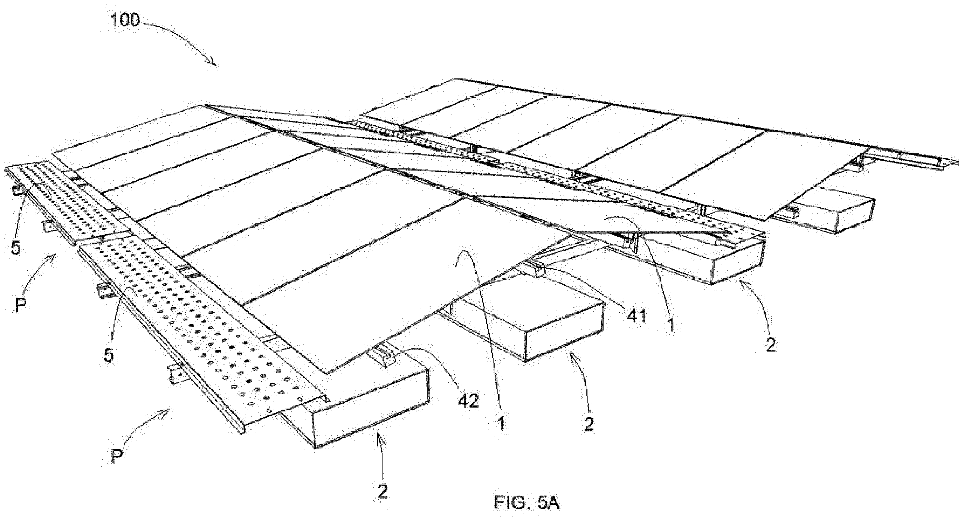

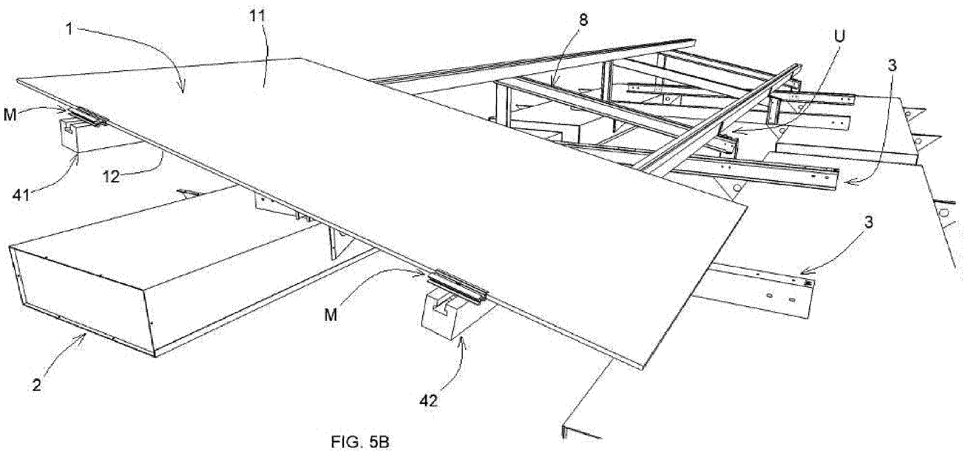

Fig. 5 is an axonometric view of the floating photovoltaic installation according to the invention comprising two floating platforms disposed in parallel position, wherein all photovoltaic panels are directed in the same direction;
Fig. 5A is an axonometric view of the floating photovoltaic installation according to the invention comprising two floating platforms disposed in parallel position, wherein the photovoltaic panels are directed in opposite directions;
Fig. 5B is an axonometric view of a portion of the floating photovoltaic installation according to the invention;

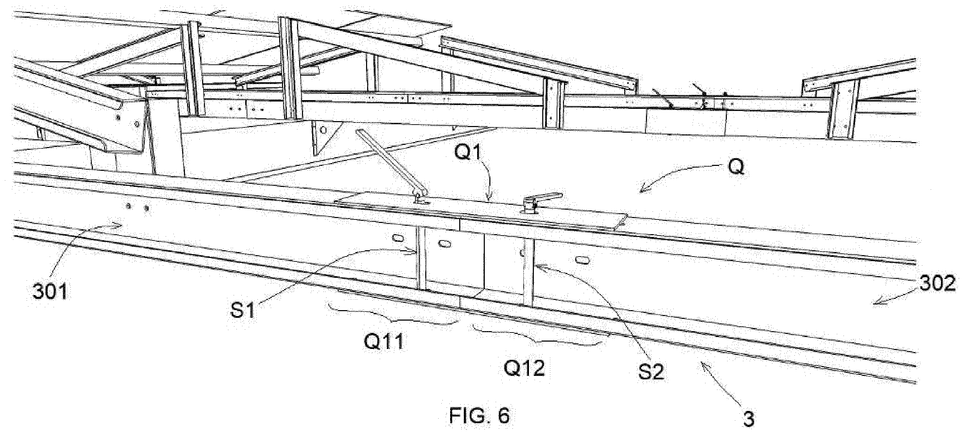

Fig. 6 is an axonometric view of a constructive detail of the floating platform according to the invention, which refers to the connection means for the elements of the side-members;

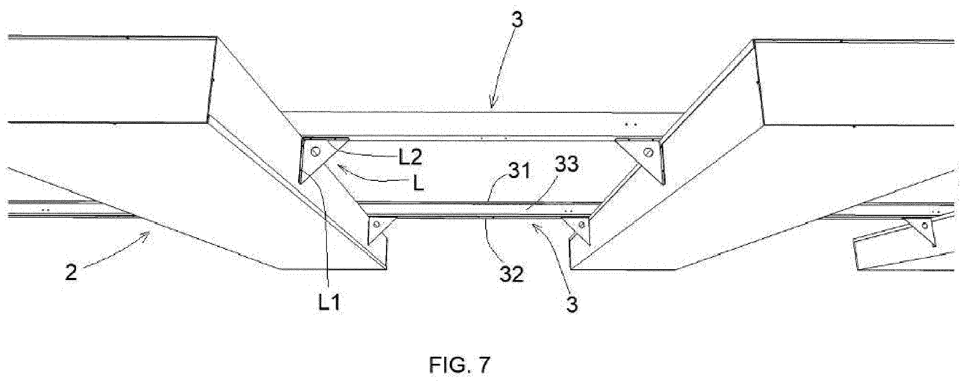

Fig. 7 is an axonometric view of a constructive detail of the floating platform according to the invention, which refers to the connection means used for connecting the side-members to the floating bodies;

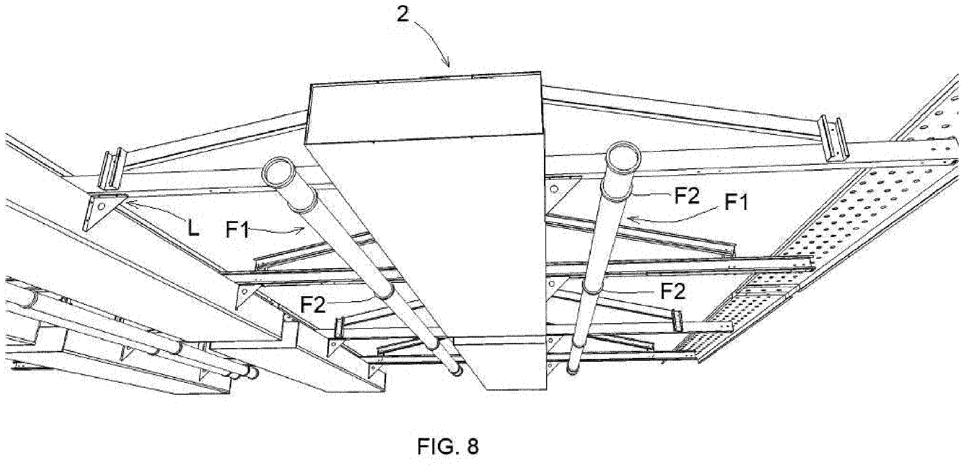

Fig. 8 is an axonometric view of a constructive detail of the floating platform according to the invention, which refers to reinforcement tubes of the floating platform;

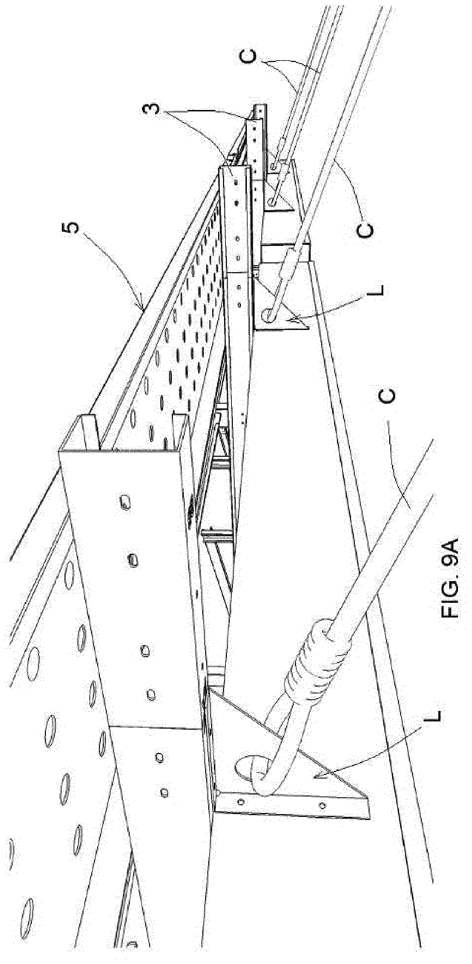

Fig. 9A is an axonometric view of a constructive detail of the floating platform according to the invention, which refers to a first connection method of the connection means of the anchoring devices;

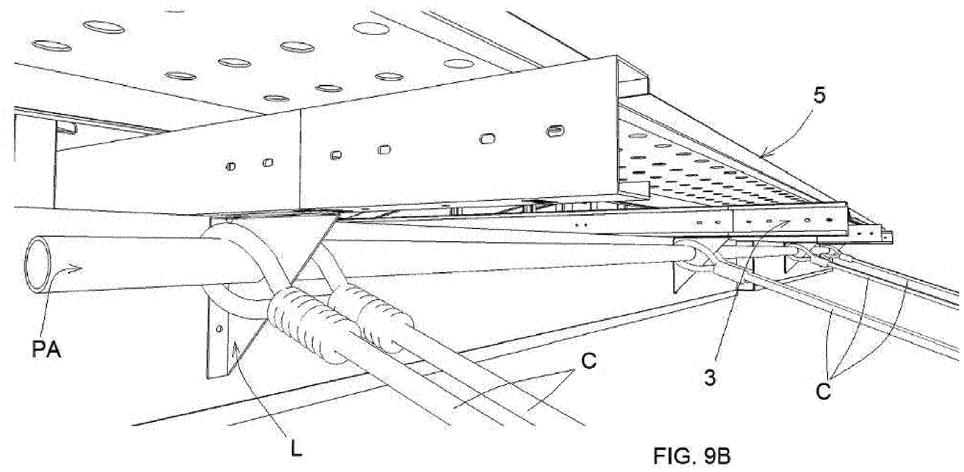

Fig. 9B is an axonometric view of a constructive detail of the floating platform according to the invention, which refers to a second connection method of the connection means of the anchoring devices;

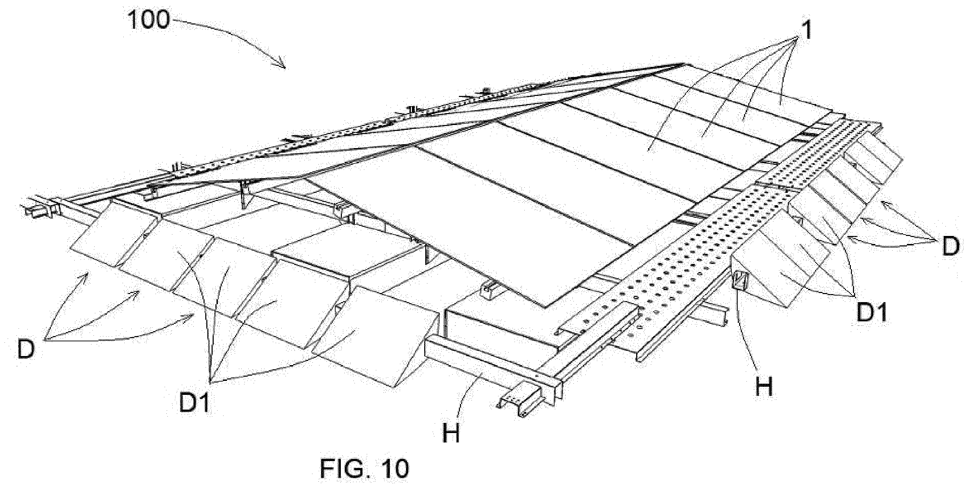

Fig. 10 is an axonometric view of the floating photovoltaic installation according to the invention, wherein air deflectors are installed on the perimeter;

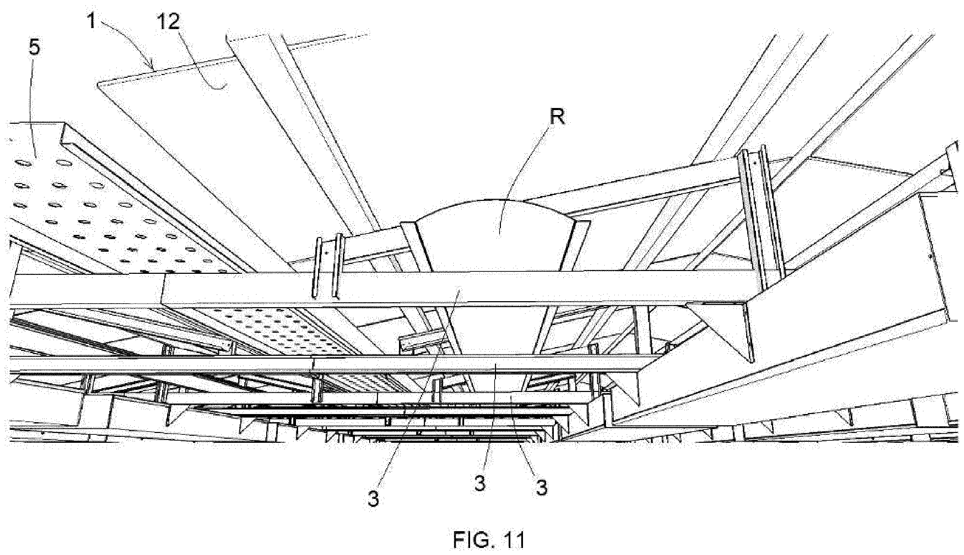

Fig. 11 is an axonometric view of a portion of the floating photovoltaic installation according to the invention wherein reflectors are disposed under the photovoltaic panels.

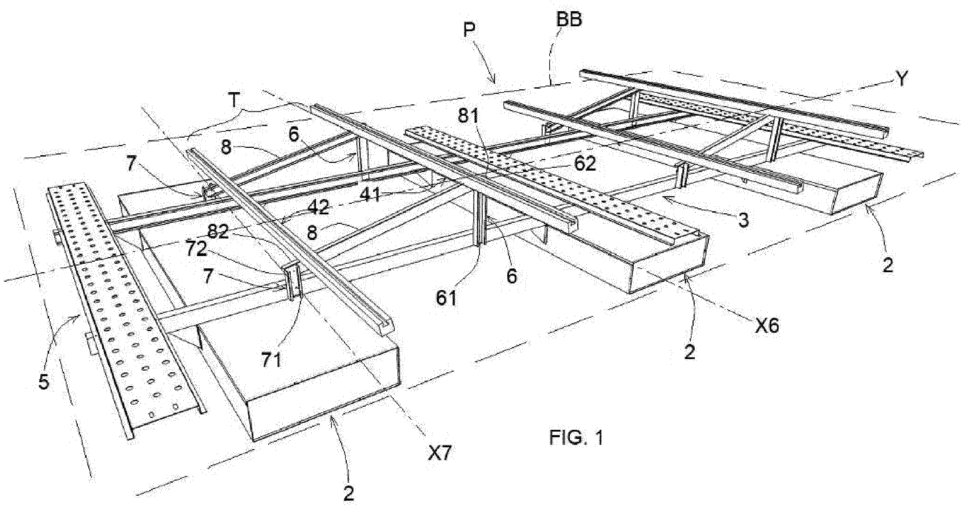

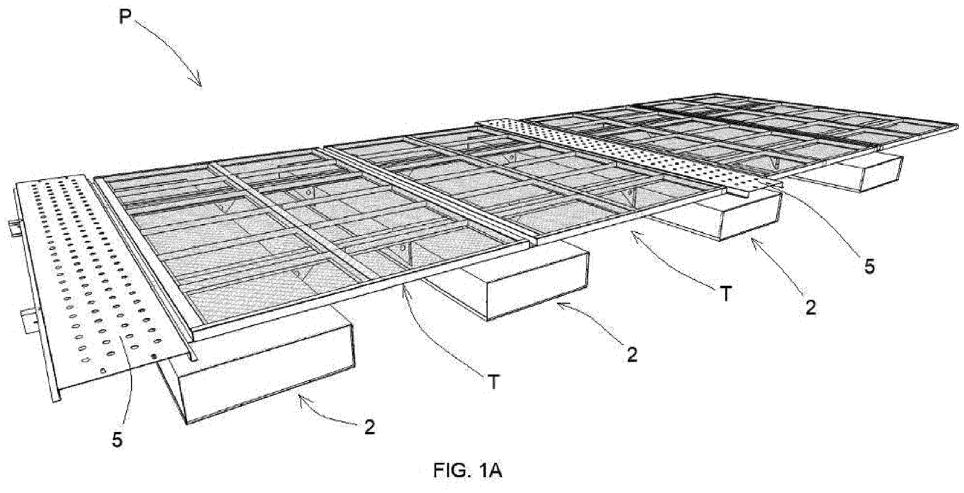

With reference to Fig. 1, a floating platform according to the invention is disclosed, being generally indicated with reference letter (P).

The floating platform (P) is part of a floating photovoltaic installation (Figs. 4, 4A, 5 and 5A) also comprising a plurality of photovoltaic panels (1) mounted on said floating platform (P).

The floating platform (P) is suitable for floating on a water surface of a marine environment, such as an artificial basin, a lake, a lagoon and the like.

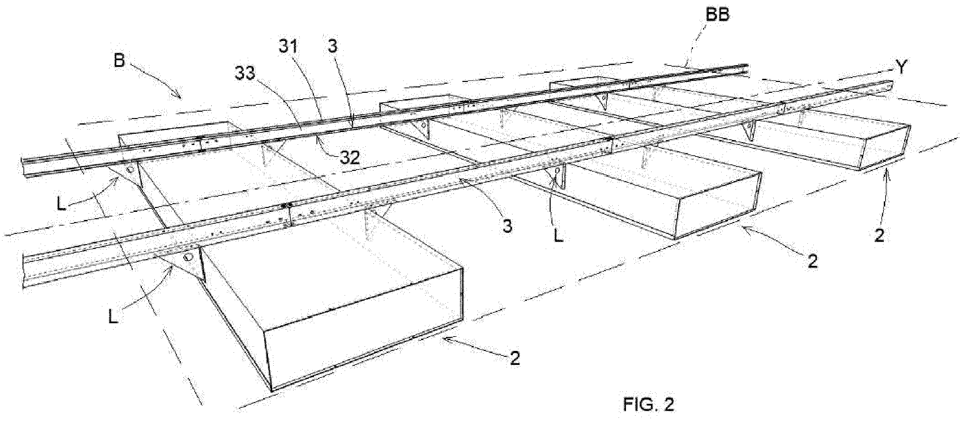

With reference to Figs. 1 and 2, the floating platform (P) comprises a base structure (B) with one or more floating bodies (2) that are spaced along an axis (Y).

Each floating body (2) is suitable for being partially immersed in water, in such a way to simultaneously guarantee floatability and maximum solar refraction.

The floating bodies (2) comprise a block (20) made of cross-linked polyethylene foam and a covering frame (22, 23) made of steel, preferably aluminized steel, which totally or partially covers the block (20) of cross-linked polyethylene foam. In particular, said floating body (2) is constructed in such a way to guarantee the physical separation of the two different materials (steel and cross-linked polyethylene foam) until the end of the life cycle of the floating platform (P), thus guaranteeing 100% recyclability.

Each block (20) is shaped like a rectangular parallelepiped with longitudinal axis (V) and comprises an upper side suitable for protruding in upper position from the water surface, a lower side (20b) suitable for being disposed under the water surface, two longitudinal lateral sides (20c) in parallel position and two transverse lateral sides (20d) disposed in parallel position and in transverse direction with respect to said longitudinal lateral sides (20c).

According to a first embodiment of the invention, the block (20) is completely covered by said covering frame (22) (see Figs. 1, 2 and 3), whereas according to a second embodiment of the invention, said block (20) is only partially covered by said covering frame (23) (see Figs. 3A, 3B and 3C).

According to said first embodiment of the invention, the covering frame (22) comprises a plurality of plates that are connected in such a way to define a box body wherein said block (20) is disposed.

In particular, said plurality of plates comprises an upper plate (22a) that covers the upper side of the block (20), a lower plate (22b) that covers the lower side (20b) of the block (20), two longitudinal lateral plates (22c) and two transverse lateral plates (22d) that cover the longitudinal lateral sides (20c) and the transverse lateral sides (20d) of the block (20).

With reference to Figs. 3A, 3B and 3C, according to the second embodiment of the invention, the frame (23) comprises an upper semi-frame (231) and a lower semi-frame (232) connected in such a way to embrace the block (20).

The upper semi-frame (231) comprises a central plate (231a) that completely covers said upper side of the block (20) and two longitudinal lateral plates (231b) obtained in one piece with said central plate (231a) that cover said longitudinal lateral sides (20c) of the block (20), at least partially.

The upper semi-frame (231) comprises first connection portions (231aa) that orthogonally protrude from said central plate (231a) and are disposed in adjacent position relative to said transverse lateral sides (20d) of the block (20), and second connection portions (231bb) obtained in one piece with said longitudinal lateral plates (231b).

The lower semi-frame (232) comprises a longitudinal band (232a) and two transverse bands (232b) that embrace the block (20) on the sides and on the bottom along two orthogonal planes.

More particularly, said longitudinal band (232a) comprises a central portion that extends longitudinally along the entire lower side (20b) of the block (20) and two L-bent ending sections that embrace one of said transverse lateral sides (20d) and are connected to the first connection portions (231aa) by means of bolts inserted in holes provided in said ending sections and in holes provided in said first connection portions (231aa).

Said transverse bands (232b) comprise a central portion that extends along the lower side (20b) orthogonally to said longitudinal axis (V) of the body (20), and two L-bent ending sections that embrace one of said longitudinal lateral sides and are connected to said second connection portions (231bb) by means of bolts inserted in holes provided in said longitudinal lateral plates (231b) of the upper semi-frame (231) and in holes provided n said ending sections of the transverse bands (232b). It must be noted that, although in the appended figures the blocks (20), and consequently the floating bodies (2), have a rectangular parallelepiped shape, the purposes of the present invention are also achieved if the blocks (20) have a triangular parallelepiped shape or a cylindrical shape.

The covering frames (22, 23) of aluminized steel have a surface coating that protects the floating bodies.

Said surface coating has the following composition in weight percentages:
- 43.4% of zinc;
- 55% of aluminum;
- 1.6% of silicon.

With such a composition, said surface coating combines the anti-corrosion and alkaline resistance features of zinc with the duration, heat resistance and resistance in acid environments of aluminum.

A surface coating with said features is already available on the market; amongst the several embodiments of said technology, the product marketed as Galvalume® can be mentioned.

It must be noted that the composition percentages of the surface coating can be slightly changed and improved to increase the resistance against corrosion caused by alkaline agents compared to Galvalume®.

For illustrative purposes, the product marked as Magnelis® can be alternately used as coating.

The block (20) of foam plastic material is advantageously a block of polyethylene foam.

Advantageously, the density of the polyethylene foam block is comprised between 20 Kg/m³ and 35 Kg/m³.

Preferably, said floating block is made of XPE (cross-linked polyethylene foam), which is a polymeric material characterized by good elasticity, high compactness, good thermal insulation, good resistance against aging and high temperatures, as well as waterproofing.

As an alternative to the block made of XPE, other types of cross-linked foam or no-foam plastic materials with a lower density than water density, which is approximately 997 Kg/m³, can be used.

The base structure (B) of the floating platform (P) also comprises side-members (3) disposed in adjacent position that connect the floating bodies (2) and provide solidity and rigidity to the base structure (B).

The side-members (3) in adjacent position define a base (BB).

Advantageously, said side-members (3) are made of steel, preferably aluminized steel, and are provided with said coating made of aluminum, zinc and silicon.

With reference to Figs. 2 and 3, the side-members (3) have a longitudinal axis parallel to the axis (Y) wherein said floating bodies (2) are spaced.

The side-members (3) are supported on said floating bodies (2) and are connected to said floating bodies (2) by means of connection means.

The side-members (3) have a C-shaped profile and have an upper portion (31), a lower portion (32) and a central portion (33) in transverse position relative to said lower portion (32) and to said upper portion (31).

With reference to Fig. 7, the connection means consist in L-shaped plates (L) with a first lateral element (L1) disposed in adjacent position relative to a longitudinal lateral plate (22c, 231b) of the frame (22) and connected to said longitudinal lateral plate (22c, 231b) by means of self-tapping screws, rivets or bolts inserted in holes provided in the first lateral element (L1) and in holes provided on the longitudinal lateral plate (22c, 231b) of the floating body (2), whereas the second lateral element (L2) is disposed in adjacent position relative to the lower portion (32) of the side-member (3) and is connected to said side-member (3) by means of bolts inserted in holes provided in the second lateral element (L2) and in holes provided in said lower portion (32) of the side-member (3).

Because of the provision of said plates (L) used for connecting the side-members (3) to the floating bodies (2), the height of the base (BB) defined by the side-members (3) relative to the free water surface can be adjusted, also after the platform in installed. Moreover, said plates (L) can be also used for connecting the devices that are immersed under the platform.

With reference to Fig. 1, the floating platform (P) also comprises a supporting structure comprising one or more supporting frame (T) connected to the base structure (B) and suitable for supporting the photovoltaic panels (1).

Preferably, said supporting frames (T) are suitably configured to support the photovoltaic panels (1) in a position inclined by an angle (α) relative to the base (BB).

Such an angle (α) is advantageously given amplitude of approximately 12° as the ideal balance between the safety and the efficiency of the floating photovoltaic installation.

More precisely, on one side such amplitude reduces the impact surface of the wind on the photovoltaic panels (1), avoiding any structural damage that may impair the normal operation of the photovoltaic panels (1), and on the other side such amplitude does not dramatically reduce the power performance of the photovoltaic panels (1).

Moreover, because of the amplitude of such an angle (α), the photovoltaic panels (1) can be maintained in a basically parallel position to the water surface, thus minimizing the alteration of the landscape for an observer situated in a substantially coplanar position with the water surface, and at the same time maximizing the integration of the photovoltaic panels (1) in the surrounding environment.

With reference to Fig. 1, the supporting frame (T) comprises:
- a first post (6) and a second post (7) with different height for each side-member (3); said first post (6) and said second post (7) comprise a base (61, 71) and a head (62, 72); the base (61, 71) of said posts (6, 7) is connected to said side-member (3) in the proximity of said base (BB);
- an inclined crossbar (8) for each pair of posts (6, 7); said inclined crossbar (8) comprises a first end (81) connected to the head (62) of the first post (6), and a second end (82) connected to the head (72) of the second post (7); the inclined crossbar (8) is inclined by the same angle (α) of the photovoltaic panel (1) or of the photovoltaic panels (1);
- a first supporting section (41) and a second supporting section (42) in parallel position disposed above the inclined crossbars (8), where said photovoltaic panels (1) are connected by means of connection devices (M).

The first posts (6) of a supporting frame (T) are aligned along a first axis (X6) orthogonal to the axis (Y).

Likewise, the second first posts (7) of a supporting frame (T) are aligned along a second axis (X7) orthogonal to the axis (Y).

The floating platform (P) comprises:
- first connection means for connecting the base (61, 71) of each post (6, 7) to the side-member (3);
- second connection means for connecting the first end (81) of the inclined crossbar (8) to the head (62) of the first post (6), and for connecting the second end (82) of the inclined crossbar (8) to the head (72) of the second post (7);
- third connection means for connecting a portion of the first supporting section (41) with a portion of the inclined crossbar (8), in the proximity of the first end (81) of said inclined crossbar (8), and for connecting a portion of the second supporting section (42) with a portion of the inclined crossbar (8), in the proximity of the second end (82) of said inclined crossbar (8).

Said first connection means preferably comprise bolts inserted in holes provided in the first end (61, 71) of the post (6, 7) and in holes provided in portions of the side-member (3).

Said second connection means preferably comprise bolted connections.

In particular, said second connection means comprise:
- first bolts inserted in holes provided in the first end (81) of the inclined crossbar (8) and in holes provided in the head (62) of the first post (6);
- second bolts inserted in holes provided in the second end (82) of the inclined crossbar (8) and in holes provided in the head (72) of the second post (7).

Said third connection means comprise L-shaped plates (U) (see Fig. 5B) provided with a first lateral element in adjacent position and connected to said inclined crossbar (8) with bolts, and a second lateral element in adjacent position connected to the portion of the supporting section (41, 42) with bolts.

Preferably, said supporting structure with its supporting frames (T) is made of steel, preferably aluminized steel, and is provided with said coating made of aluminum, zinc and silicon.

According to an embodiment of the invention, with reference to Fig. 5B, the connection devices (M) used for connecting the photovoltaic panels (1) to the supporting sections (41, 42) consist in clamps known to the experts of the field and commonly found on the market, which can be adjusted in height in order to connect photovoltaic panels (1) with different thickness.

With reference to Fig. 8, the floating platform (P) also comprises reinforcing tubes (F1) disposed in orthogonal position relative to said side-members (3) and connected to said side-members (3) with connection means, such as collars (F2). Moreover, said reinforcing tubes (F1) may be connected under the side-members (3) with connection means, such as clips, also after the installation is completed.

Each reinforcing tube (F1) comprises a closed internal channel wherein air at atmospheric pressure is provided.

Preferably, said reinforcing tubes (F1) are advantageously made of a plastic material, in particular PVC, or bamboo.

The number of reinforcing tubes (F1) connected to the side-members (3) may vary according to the load to be withstood by the floating platform (P). Moreover, the diameter of said reinforcing tubes (F1) is such that the reinforcing tubes (F1) participate in the general floatability of the installation only when the installation is immersed in water by a preset depth. Advantageously, the floating platform (P) comprises fairlead channels and/or gangways (5) connected to the side-members (3) in correspondence of connection sections of the side-members (3).

Preferably, said fairlead channels and/or gangways (5) are made of aluminized steel.

Moreover, the floating platform (P) is provided with one or more anchoring devices that maintain the floating platform (100) in stable position on the water surface.

For the use provided for by the present invention, the anchoring devices must resist to a force of max. 10 KN and must be capable of adjusting to a water depth of max. 30 meters.

Said floating platform (P) also comprises connection means (C) for attaching the anchoring devices to the floating platform (P).

Said connection means (C) comprise anchoring ropes provided with a first end connected to the anchoring device and with a second end connected to the floating platform.

The connection of the connection means (C) to the floating platform (P) can be of two types.

As shown in Fig 9A, according to a first type, the individual anchoring ropes are directly connected to a hole provided in the L-shaped plates (L).

As shown in Fig. 9B, according to a second type, the attachment is made with double anchoring rope to a steel post (PA) that acts as stabilizing bar, inserted in the aligned holes of the L-shaped plate. In particular, said post (PA) can be also installed when the installation of the platform is completed.

According to such second type, the holding force of the anchoring devices can be increased for special environments (such as areas subject to typhoons or hurricanes) that need a stronger connection of the floating platform (P) to the anchoring devices. Moreover, said second type of connection of the connection means (C) to the floating platform (P) is ideal to increase the resistance of the platform in case of impacts with objects that float in the current (trunks/different materials), guaranteeing a higher safety for maintenance operators.

The anchoring devices connected to said connection means (C) that are anchored to the ground are not shown in the appended figures because they are known to an expert of the field and do not fall within the scope of the present invention.

For illustrative purposes, the anchoring device marketed as "seaflex system" by SEAFLEX, or the product marketed as "marine flex" by MSNZ can be mentioned.

In order to install a desired number of photovoltaic panels (1) and obtain a floating photovoltaic installation (100) with the desired power, the floating photovoltaic installation (100) can be extended along the axis (Y) and orthogonally to the axis (Y).

In order to extend the photovoltaic installation along the axis (Y), additional floating bodies (2) are disposed along the axis (Y) and connected with the side-members (3).

With reference to Fig. 6, in order to obtain side-members (3) with a desired length, said side-members (3) are modular and comprise a plurality of elements (301, 302) aligned and connected with connection elements (Q).

With reference to Fig. 6, the connection elements (Q) comprise:
- a C-shaped connection plate (Q1) with a first portion (Q11) that embraces an ending section of a first element (301) of the side-member (3) and a second portion (Q12) that embraces an ending section of a second element (302) of the side-member (3) disposed in consecutive position;
- tightening means to tighten the connection plate (Q1) to the ending sections of the elements (301, 302).

According to the embodiment shown in the appended figures, the tightening means comprise two cam tightening levers (S1, S2), namely a first cam tightening lever (S1) to connect the first portion (Q11) of the connection plate (Q1) to the ending section of the first element (301), and a second cam tightening lever (S2) to connect the second portion (Q12) of the connection plate (Q2) to the ending section of the second element (302).

Alternatively, said tightening means may consist in bolts inserted in holes provided on the portion of the connection plate and in holes provided in the ending section of the element (301, 302).

With reference to Figs. 5 and 5A, in order to extend the floating photovoltaic installation (100) orthogonally to the axis (Y), a plurality of floating platforms (P) is disposed in parallel position and connected with connection elements.

Preferably, said connection means are fixed to the gangways (5) of floating platforms (P) in adjacent position in such a way to connect the two floating platforms (P).

Said connection elements preferably consist in plates fixed to both gangways (5) by means of bolts.

Evidently, because of its modularity and of the possibility to expand the floating photovoltaic installation (100) as desired along the axis (Y) and orthogonally to such an axis (Y), a floating photovoltaic installation (100) with desired power can be obtained with a specific composition of photovoltaic panels (1) according to the type and place of installation.

With reference to Figs. 5 and 5A, the photovoltaic panels (1) can be installed in such a way to be directed in the same direction (see Fig. 5) or can be installed in such a way to be directed in a different direction, more precisely in an opposite direction, as shown in Fig. 5A.

The first solution of Fig. 5 provides a very efficient floating photovoltaic installation (100) because the photovoltaic panels (1) are all directed in a direction that maximizes the incident solar radiation on the photovoltaic panels (1). Although less efficient than the solution of Fig. 5, the second solution of Fig. 5A optimizes the operating surface of the floating photovoltaic installation (100) by installing a higher number of photovoltaic panels (1) compared to the first solution, with the same operating surface of the floating photovoltaic installation (100). With reference to Fig. 5A, the specific position of the photovoltaic panels (1) originates a roof-like arrangement that results in a chimney-effect given by the progressive narrowing of the space between the panels. Such an arrangement of the photovoltaic panels (1) increases the extraction rate of the hot air, from the bottom up, with evident advantages in terms of cooling.

In addition to the surface coating, the floating body (2) and/or the supporting structure (T) and/or the connection bars (3) also comprise an external waterproof resin layer that increases protection, and specifically provides waterproofing and corrosion resistance.

Advantageously, two-sided photovoltaic panels (1), namely photovoltaic panels (1) with photovoltaic cells on the front side (11), i.e. the side facing upwards, and on the back side (12), i.e. the side facing the floating platform (P), can be installed in the photovoltaic installation.

In order to increase the performance of said two-sided photovoltaic panels (1), said photovoltaic installation comprises reflectors (R) made of reflecting material that are fixed on the side-members (3) and under the photovoltaic panels (1) and suitably configured to reflect the majority of the incident solar radiation. Said reflectors (R) increase the refraction of the light reflected on the back side (12) of the photovoltaic panel (1), consequently maximizing the albedo during the entire day, minimizing water evaporation, and maximizing heat dispersion.

Said reflectors (R) comprise concave sections with concavity directed towards the floating platform (P).

Said reflectors (R) are made of steel, preferably aluminized steel with said coating.

In addition to aluminized steel, said reflectors (R) can be made of steel with a coating of high-reflectance material.

With reference to Fig. 10, said floating platform (P) or said floating photovoltaic installation (100) may comprise means suitable for reducing the wind load that hits said floating platform (P) or said floating photovoltaic installation (100).

Otherwise said, deflectors (D) can be provided on the perimeter of the floating platform (P) or of the photovoltaic installation (100), each deflector (D) comprising a body of a flexible material and/or a semi-rigid material (PP or also HDPE type) shaped like a prism with a substantially triangular section that comprises an inclined surface (D1) directed towards the exterior of the floating platform (P) or of the photovoltaic installation (100) and participating in the perimeter floatability of the structure.

In view of the above, the wind that hits such an inclined surface (D1) is deviated upwards, preventing the wind from hitting the supporting surface or the photovoltaic panels (1) and avoiding possible damage or failure.

The deflectors (D) are supported by supporting bars (H) that longitudinally cross the body of the deflectors (D).

The supporting bars (H) may be connected to the gangways (5) with fit-in connection means and to the side-members (3) with bolts.

The advantages of the present invention are manifest after the preceding description.

In particular, being made of aluminized steel and provided with said coating, the covering frames (22, 23) of the floating bodies (2) are immune to corrosion and galvanic currents and have a high shock resistance.

Moreover, being composed of said block (20) made of cross-linked polyethylene foam, and being therefore "solid", the floating bodies (2) are no longer subject to water infiltration and penetration, therefore being "unsinkable".

Therefore, because of the resistance and reliability of the floating bodies (2) and of the entire structure, the floating platform (P) is extremely reliable for a period of time that is equal to or longer than the life cycle of the devices installed on the floating platform (P).

So, the floating platform (P) is ideal for being used in a floating photovoltaic installation (100) because the life cycle of the floating platform (P) is longer than the life cycle of the photovoltaic panels installed on the floating platform (P) that normally have a life cycle of 20-25 years.

Furthermore, given that all parts of the floating platform (P) are connected with removable connection means, the floating platform (P) has a modular structure and can be stored and handled easily after disconnecting the various parts.

Although in this description the floating platform (P) is an integral part of a floating photovoltaic installation (100), the floating platform (P) can be used to support any other type of device, such as for instance antennas, relay stations, transformers, and the like.

Evidently, in such a case, the supporting frames (T) of the supporting structure will have a suitable configuration to adequately support said devices.

For illustrative purpose, in Fig. 3A said supporting frames (T) of the supporting structure consist in a set of supporting grilles (supporting surfaces with a set of crossed elements) connected to the side-members (3) of the base structure (B) suitable for supporting equipment and structures of different type, such as agrotechnical structures, structures for marine farming, and the like.

Numerous equivalent variations and modifications, which are within the reach of an expert of the field and fall in any case within the scope of the invention as disclosed by the appended claims, can be made to the present embodiment of the invention.

## Claims

1. Floating platform (P) for supporting photovoltaic panels (1); said floating platform (P) comprising:
- a base structure (B) comprising at least one floating body (2) suitable for being partially immersed in water; said at least one floating body (2) comprising a block (20) made of cross-linked polyethylene foam and a covering frame (22, 23) that covers said block (20) of cross-linked polyethylene foam completely or partially;
- a support structure comprising at least one supporting frame (T) connected to said base structure (B) and suitable for supporting said plurality of photovoltaic panels (1); **characterized in that** said covering frame (22, 23) of said at least one floating body (2) of said base structure (B) is made of high-refraction steel, and said block (20) of said at least one floating body (2) of said base structure (B) is made of Cross-Jinked Polyethylene Foam with a lower density than water; said supporting frame (T) of said supporting structure being anchored to the base structure (B).

2. The floating platform (P) of claim 1, wherein said cross-linked polyethylene foam is XPE.

3. The floating platform (P) of claim 1 or 2, wherein said supporting structure is made of steel.

4. The floating platform (P) of claim 3, wherein said supporting structure is made of high-refraction aluminized steel.

5. The floating platform (P) of any of the preceding claims, wherein said covering frame (22, 23) is made of high-refraction aluminized steel.

6. The floating platform (P) of claim 4 or 5, wherein said covering frame (22, 23) made of aluminized steel of said at least one floating body (2) and/or said supporting structure made of aluminized steel comprises/comprise a surface coating with the following composition in weight percentage:
- 43.4% of zinc;
- 55% of aluminum;
- 1.6% of silicon.

7. The floating platform (P) of any one of the preceding claims, wherein said block (20) of the floating body (2) has a parallelepiped shape with longitudinal axis (V) and comprises an upper side, a lower side (20b), two longitudinal lateral sides (20c) in parallel position and two transverse lateral sides (20d) in parallel position; said frame (22) comprising a plurality of plates connected in such a way to define a box body wherein said block is disposed (20); said plurality of plates comprising an upper plate (22a) that covers said upper side of the block (20), a lower plate (22b) that covers said lower side of the block (20), two longitudinal lateral plates (22c) that cover the two longitudinal lateral sides (20c) of the block (20) and two transverse lateral plates (22d) that cover the transverse lateral sides (20d) of the block (20).

8. The floating platform (P) of any one of claims 1 to 6, wherein said block (20) has a parallelepiped shape with longitudinal axis (V) and comprises an upper side, a lower side (20b), two longitudinal lateral sides (20c) in parallel position and two transverse lateral sides (20d) in parallel position; said frame (23) comprising an upper semi-frame (231) and a lower semi-frame (232) that are connected one to the other; said upper semi-frame (231) comprising a central plate (231a) that covers said upper side of the block (20) and two longitudinal lateral plates (231b) that cover said longitudinal lateral sides (20c) of the block (20), at least partially, and are obtained in one piece with said central plate (231a); said lower semi-frame (232) comprising a longitudinal band (232a) and at least one transverse band (232b) that embrace the block (20) on the sides and on the bottom along two orthogonal planes.

9. The floating platform (P) of any one of the preceding claims, wherein said base structure (B) comprises a plurality of floating bodies (2) and side-members (3) made of high-refraction aluminized steel in adjacent position that connect said floating bodies (2) and define a base (BB); each side-member (3) being connected to said floating bodies (2) by means of plates (L) that permit to adjust the height of the base (BB) with respect to the water free surface.

10. The floating platform (P) of any one of the preceding claims, comprising deflectors (D) disposed on the perimeter of said floating platform (P); each deflector (D) comprising a body made of a flexible and/or a semi-rigid material shaped like a prism with a substantially triangular section that comprises an inclined surface (D1) directed towards the exterior of the floating platform (P).

11. The floating platform (P) of claim 9 or 10, comprising fairlead channels and/or gangways (5) connected to the side-members (3) in correspondence of connection sections of the side-members (3).

12. Floating photovoltaic installation (100) comprising at least one floating platform (P) according to any one of claims 7 to 11, and a plurality of photovoltaic panels (1) supported by said floating platform (P).

13. The floating photovoltaic installation (100) of claim 12, wherein said at least one supporting frame of said supporting structure is configured in such a way to support said photovoltaic panels (1) in a position inclined by an angle (α) relative to said base (BB).

14. The floating photovoltaic installation (100) comprising at least one floating platform (P) according to any one of claims 8 to 11, and a plurality of photovoltaic panels (1) supported by said floating platform (P); said supporting frame (T) of said supporting structure of said floating platform (P) comprising:
- a first post (6) and a second post (7) with different height for each side-member (3); said first post (6) and said second post (7) comprising a base (61, 71) and a head (62, 72); said base (61, 71) of said posts (6, 7) being connected to said side-member (3) in the proximity of said base (BB);
- an inclined crossbar (8) comprising a first end (81) connected to the head (62) of the first post (6), and a second end (82) connected to the head (72) of the second post (7); said inclined crossbar (8) being inclined by an angle (α) relative to said base (BB);
- a first supporting section (41) and a second supporting section (42) in parallel position, disposed above the two inclined crossbars (8), whereto said photovoltaic panels (1) are connected by means of connecting devices (M).

15. The floating photovoltaic installation (100) of any one of claims 12 to 14, comprising two-sided photovoltaic panels (1) and reflectors (R) made of high-refraction aluminized steel integrated in the base structure by means of a connection on the side-members (3) and disposed under said two-sided photovoltaic panels (1).
